# EUROPÄISCHE PATENTANMELDUNG

(11) **EP 2 323 197 A2**
(43) Veröffentlichungstag der Anmeldung: **18.05.2011**
(21) Anmeldenummer: 10014460.9
(22) Anmeldetag: 10.11.2010
(51) Int. Cl.: H01M 2/30

(54) **Batterie mit Haltevorrichtung**

(30) Priorität: 11.11.2009 DE 202009015277 U
(71) Anmelder: ZE-mobility GmbH & Co. KG, 04277 Leipzig (DE)
(72) Erfinder: Ring, Stephan, 04279 Leipzig (DE); Heise, Marko, 04107 Leipzig (DE); Keller, Garrit, 10999 Berlin (DE); Jöesaar, Boris, 10783 Berlin (DE)

(57) **Zusammenfassung**

Batterie umfassend zumindest einen Griff und eine Arretiereinrichtung zum Arretieren der Batterie an einem Batteriehalter, dadurch gekennzeichnet, dass die Arretiereinrichtung mittels des Griffs betätigbar ist.

## Beschreibung

Die vorliegende Erfindung befasst sich mit einer Batterie, umfassend zumindest einen Griff und eine Arretiereinrichtung zum Befestigen der Batterie an einem Batteriehalter, nach dem Oberbegriff des Anspruchs 1.

Außerdem befasst sich die Erfindung mit einem System, umfassend eine Batterie und einen Batteriehalter bzw. ein Fahrzeug, umfassend ein Batteriesystem nach den Oberbegriffen der Ansprüchen 9 und 10.

Batterien sind allgemein bekannt und werden im Allgemeinen zum Speichern von elektrischer Energie verwendet. In Fahrzeugen werden dabei wiederaufladbare Batterien sogenannte Akkus verwendet, welchen viele Male elektrische Energie zugeführt werden kann, die von den Akkus gespeichert wird. In Fahrzeugen mit einem nicht-elektrischen Antrieb werden diese Akkus mittels dem Antriebsmotor über einen Generator immer wieder aufgeladen, so dass im Allgemeinen genügend elektrische Energie im Akku gespeichert ist, um kleine elektrische Motoren oder die elektrische Zündung bei Verbrennungsmotoren betreiben zu können. Dies ist bei elektrisch angetriebenen Fahrzeugen nicht der Fall.

Da bei elektrisch angetriebenen Fahrzeugen außer der gespeicherten elektrische Energie kein weiterer Energieträger zur Verfügung steht, muss die Batterie von Zeit zu Zeit mit elektrischer Energie von außen versorgt werden. Dazu sind sogenannte plug-in-Konzepte bekannt, bei denen das elektrisch angetriebene Fahrzeug an das Stromnetz, das zum Beispiel Haushalten zu Verfügung steht, angeschlossen wird und so die Batterie aufgeladen wird. Auf Grund der langen Ladezeiten sind solche Konzepte jedoch nur bedingt sinnvoll, da das elektrisch angetriebene Fahrzeug während des Aufladens der Batterie nicht einsatzfähig ist.

Um diesem Abhilfe zu schaffen, wurde vorgeschlagen, die entleerte Batterie durch eine aufgeladene Batterie zu ersetzen und die entleerte Batterie unabhängig vom Fahrzeug aufzuladen. Durch die Verwendung von zwei oder mehreren Batterien ist es möglich, auch bei langen Ladezeiten des Akkus das Fahrzeug betriebsbereit zu halten. Zur Verwirklichung des Konzepts muss jedoch der einfache Wechsel der Batterie ermöglicht werden.

Aufgabe der Erfindung ist es, eine Batterie bereit zu stellen, die einfach ausgewechselt werden kann.

Gelöst wird diese Aufgabe durch eine Batterie nach Anspruch 1. Bevorzugte Ausführungsformen finden sich in den Unteransprüchen.

Bevorzugt gelöst wird die Aufgabe durch eine Batterie, welche zumindest einen Griff und eine Arretiereinrichtung zum Befestigen der Batterie in einem Batteriehalter aufweist, wobei die Arretiereinrichtung mittels des Griffs zu betätigt werden kann.

Unter einer Batterie wird hier eine Vorrichtung zum Speichern von elektrischer Energie verstanden. Insbesondere eine Vorrichtung, die geeignet ist, mehrmals verwendet zu werden und mehrmals mit Energie beladen zu werden. Eine solche Batterie kann eine Mehrzahl an Batteriezellen aufweisen, die zu einer elektrischen Speichereinheit zusammengefügt sind.

Unter einem Griff wird hier eine Vorrichtung verstanden, die es ermöglicht, die Batterie zu handhaben, insbesondere aus dem Batteriehalter zu entfernen oder in den Batteriehalter einzufügen. Ein solcher Griff kann an der Unterseite oder an den Seitenflächen der Batterie angeordnet sein, insbesondere jedoch an de Oberseite der Batterie. Ein solcher Griff kann ein hervorstehender Griff sein, wie ein Henkel, oder aber eine oder mehrere Ausnehmungen an oder in der Batterie, so dass die Batterie gehandhabt werden kann, indem in die Ausnehmung gegriffen wird. Auch können mehrere Griffe, bevorzugt an verschiedenen Seiten der Batterie, angeordnet sein.

Es ist auch ein Batteriehalter Gegenstand der Erfindung.

Unter einem Batteriehalter wird eine Vorrichtung verstanden, die zum Halten der Batterie geeignet ist. Ein solcher Batteriehalter kann zum Beispiel eine eigenständige Vorrichtung sein, die mit dem Fahrzeug verbunden ist und/oder durch das Fahrzeug selber gebildet ist. Bevorzugt kann ein Batteriehalter auch ein Teil der Aufladestation sein, mit welcher die Batterie aufgeladen werden kann. Der Batteriehalter ist geeignet, um die Batterie zu halten und bevorzugt einen sicheren elektrischen Kontakt zwischen der Batterie und einem elektrischen Verbraucher und/oder einer Aufladestation zu gewährleisten.

Unter einer Arretiereinrichtung zum Arretieren einer Batterie in einem Batteriehalter wird eine Vorrichtung verstanden, die geeignet ist, die Batterie auf dem Batteriehalter zumindest zeitweise zu halten.

Die Erfindung hat erkannt, dass es die Handhabung der Batterie erleichtert, wenn der Griff sowohl zu Handhabung der Batterie, als auch zur Betätigung der Arretiereinrichtung, insbesondere zum Lösen der Arretierung der Batterie am Batteriehalter verwendet werden kann. Die Arretierung kann dabei die Platzierung der Batterie in dem Batteriehalter sichern und auch den sicheren elektrischen Kontakt zwischen Batterie und Stromverbraucher, auch bei Erschütterungen, wie sie zum Beispiel durch die Bewegung des Fahrzeugs hervorgerufen werden oder wenn das Fahrzeugs sich in einer Schräglage befindet, wie am Hang, ermöglichen.

Durch das Betätigen der Arretiereinrichtung mittels des Griffes kann die Handhabung der Batterie, insbesondere der Ein- und Ausbau erheblich vereinfacht werden, da der Benutzer am Griff sowohl die Arretierung lösen und/oder bewirken, als auch die Batterie handhaben kann. Im besten Fall kann dies mit einer Hand geschehen.

Die Betätigung der Arretiereinrichtung kann das Lösen der Batterie von dem Batteriehalter und/oder das Befestigen der Batterie an dem Batteriehalter umfassen. Bevorzugt wird die Batterie durch die Betätigung der Arretiereinrichtung von dem Batteriehalter gelöst, während das Befestigen der Batterie selbsttätig insbesondere durch die Gewichtskraft der Batterie bewirkt wird.

Die Handhabung der Batterie wird dadurch einfacher, ohne dass die sichere Platzierung der Batterie an dem Batteriehalter Nachteile erleidet.

Bevorzugt weist die Arretiereinrichtung zumindest einen Verriegelungselement auf, das in Eingriff mit dem Batteriehalter gebracht werden kann. Ein solches Verriegelungselement kann z. B. ein Riegel sein, der in entsprechende Ausnehmungen des Batteriehalters eingreift und so die Batterie an dem Batteriehalter hält.

Auch kann die Batterie zumindest eine Ausnehmung aufweisen, in welche ein Verriegelungselement in einem Verriegelungszustand hineinreicht. Die Ausnehmung kann dabei so gestaltet sein, dass ein entsprechender Vorsprung des Batteriehalters in die Ausnehmung eingeführt werden kann. Bevorzugt weist der Vorsprung zumindest eine Ausnehmung, wie eine Nut, oder einen Vorsprung auf, so dass das Verriegelungselement in die Ausnehmung oder unter den Vorsprung bewegt werden kann und somit die Batterie an dem Batteriehalter hält. Bevorzugt sind zumindest zwei Verriegelungselemente an der Batterie angeordnet, welche sich bei der Überführung vom Entriegelungszustand in den Verriegelungszustand aufeinander zu bewegen, wie verschieben oder verschwenken.

Bevorzugt wird das Verriegelungselement aus einem Verriegelungszustand in einen Entriegelungszustand überführt, indem der Griff linear bewegt wird. Bevorzugt wird der Griff dabei entsprechend der Richtung bewegt, in der die Batterie von dem Batteriehalter entfernt werden soll. So kann der Benutzer zur Entfernung der Batterie von dem Batteriehalter durch eine intuitive Bewegung des Griffes in die gewünschte Richtung, gemäß der die Batterie von dem Batteriehalter weg bewegt werden soll, die Verriegelungselemente aus dem Verriegelungszustand in den Entriegelungszustand überführen und die Batterie von dem Batteriehalter lösen.

Bevorzugt ist ein Verriegelungselement über ein flexibles und/oder starres Element mit dem Griff verbunden. Insbesondere sind beide Verriegelungselemente über ein oder zwei flexible und/oder starre Elemente mit dem Griff verbunden. Durch diese mechanische Verbindung des Verriegelungselementes mit dem Griff, ist gewährleistet, dass die Verriegelungseinrichtung auch betätigt werden kann, wenn keine elektrische Energie mehr in der Batterie gespeichert ist, und so kein Elektromotor oder ähnliches bewegt werden kann. Auch kann der Griff mit dem Verriegelungselement über eine pneumatische oder hydraulische Verbindung verbunden sein. Bevorzugt kann der Griff über das Verbindungselement mit dem flexiblen und/oder starren Element oder der Mehrzahl an Elementen und dem Verriegelungselement verbunden sein. Weiter kann das flexible Element über ein Mittel zur Änderung der Bewegungsrichtung, wie einer Rolle oder einer Führung geführt werden.

Bevorzugt weist die Batterie zumindest einen, bevorzugt zwei, Kontakte auf, die federnd gelagert sind. Diese Kontakte sind elektrisch mit den elektrischen Polen der Batterie verbunden, wobei ein Kontakt mit dem Pluspol und ein Kontakt mit dem Minuspol verbunden ist, und erlauben es, von außen die Batterie an einen elektrischen Verbraucher anzuschließen. Die Kontakte sind dabei bevorzugt so federnd gelagert, dass ein Kontaktstift, der auf diese Kontakte trifft, die zur Federung verwendeten Federelemente aus ihrer Gleichgewichtsposition bringt, insbesondere staucht, so dass die Kontakte gegen die Kontaktstifte drängen. So wird ein zuverlässiger elektrischer Kontakt zwischen der Batterie und z. B. dem Batteriehalter aufgebaut, der auch bei Erschütterungen die Übertragung von elektrischen Strom ermöglicht.

Bevorzugt ist ein Verriegelungselement geeignet, einen elektrischen Kontakt zwischen dem Batteriehalter und einem elektrischen Pol der Batterie herzustellen. So wird der elektrische Kontakt erst hergestellt, wenn die Batterie sich an der richtigen Position im Batteriehalter befindet und eine Verriegelung der Batterie stattgefunden hat. Dabei kann das Verriegelungselement dauerhaft als elektrischen Kontaktpunkt dienen oder erst im Verriegelungszustand mit dem Energiespeicher verbunden werden.

Die Batterie und/oder der Batteriehalter kann mit einer akustischen Informationsübermittlung ausgestattet sein. Die akustische Informationsübermittlung kann durch akustische Signale, wie Piepsen oder Wörter dem Benutzer zum Beispiel mitteilen, dass die Batterie fast entleert ist, die Batterie voll aufgeladen ist, die falsche Batterie im Batteriehalter befindet und/oder ähnliches.

Insbesondere können die Batterie und der Batteriehalter so ausgeformt sein, dass die Orientierung der Batterie zum Batteriehalter durch die Form der beiden Teile bestimmt wird. So kann die Ausnehmung des Batteriehalters, welche die Batterie aufnimmt, einen bestimmten zum Beispiel nicht symmetrischen Querschnitt aufweisen, so dass die Batterie mit einem ähnlichen Querschnitt nur in einer Orientierung im Batteriehalter platziert werden kann. Auch kann der Batteriehalter eine oder mehrere Vorsprünge aufweisen, die in die Batterie eingreifen, wenn die Batterie im Batteriehalter eingebracht ist. Durch die Lage oder die Form der Vorsprünge, insbesondere dadurch, dass sie nicht zentral angeordnet sind, kann die Orientierung der Batterie gegenüber dem Batteriehalter festgelegt werden.

Durch das Festlegen der Orientierung der Batterie gegenüber dem Batteriehalter kann verhindert werden, dass die Batterie versehentlich in der falschen Polung auf den Batteriehalter aufgesetzt wird.

Auch ist es möglich, dass von der Batterie zum Batteriehalter und/oder in der anderen Richtung Informationen z. B. über den Ladezustand, die bisher genutzen Ladezyklen, die voraussichtlich noch verbleibenden Ladezyklen, die Bauart, den Typ der Batterie und/oder ähnliches übermittelt werden. Eine solche Informationsübermittlung kann akustisch, zum Beispiel anhand Lautsprecher und Mikrophon, optisch zum Beispiel mittels Infrarotsensor und Infrarotempfänger, elektrisch über elektrische Kontakte und/oder mechanisch stattfinden.

Die Informationsübermittlung kann im Zusammenspiel mit einer elektronischen Überwachung der Batterie auch dafür eingesetzt werden, dass erst nach einer erfolgreichen Verbindung der Batterie mit dem Batteriehalter die Kontakte an der Außenseite der Batterie mit dem Energiespeicher der Batterie verbunden werden. Auch kann die Informationsübertragung dafür genutzt werden, dass bei einem Ladevorgang der Ladevorgang erst in Gang gesetzt wird, wenn die Batterie erfolgreich mit dem Batteriehalter verbunden, die Batterie dem richtigen Typ entspricht und nicht defekt ist.

Auch ist so eine hohe Sicherheit gegen Kurzschluss durch äußere Einwirkungen gegeben.

In der Batterie kann eine elektronische Steuerung der Batterie integriert sein, um Überlast, Überspannung, Unterspannung zu verhindern, eine Verarbeitung und Speicherung aller Daten, die für die Verwendung der Batterie interessant sind, wie Typ der Batterie, Herstellungsdatum, Fehlereinträge, Hersteller, Ladezyklen etc.

Auch ist ein Batteriemanagement mit einer solchen elektronischen Steuerung realisierbar.

Weitere Vorteile und Einzelheiten der Erfindung werden im Folgenden anhand des in der Zeichnung dargestellten Ausführungsbeispiels näher erläutert. Gleiche beziehungsweise funktional gleiche Teile sind mit den gleichen Bezugszeichen gekennzeichnet.

Dabei zeigt

**Fig. 1** eine erste Ausführungsform eines Systems in einem unverriegelten Zustand bestehend aus einer Batterie und einem Batteriehalter,

**Fig. 2** das System aus **Fig. 1** in einem verriegelten Zustand,

**Fig. 3** das System aus **Fig. 1** in einem unverriegelten Zustand von einer anderen Seitenansicht,

**Fig.4** das System aus **Fig. 3** in einem unverriegelten Zustand,

**Fig. 5** eine weitere Ausführungsform eines Systems in einer Schnittansicht,

**Fig. 6** das System aus **Fig. 5** in einem aufgesetzten Zustand,

**Fig. 7** das System aus **Fig. 5** in einem verriegelten Zustand,

**Fig. 8** die Arretierungseinrichtung von oben im einem unverriegelten Zustand und

**Fig. 9** die Arretiervorrichtung von oben im einem verriegelten Zustand,

**Fig._ 10** die Batterie und.

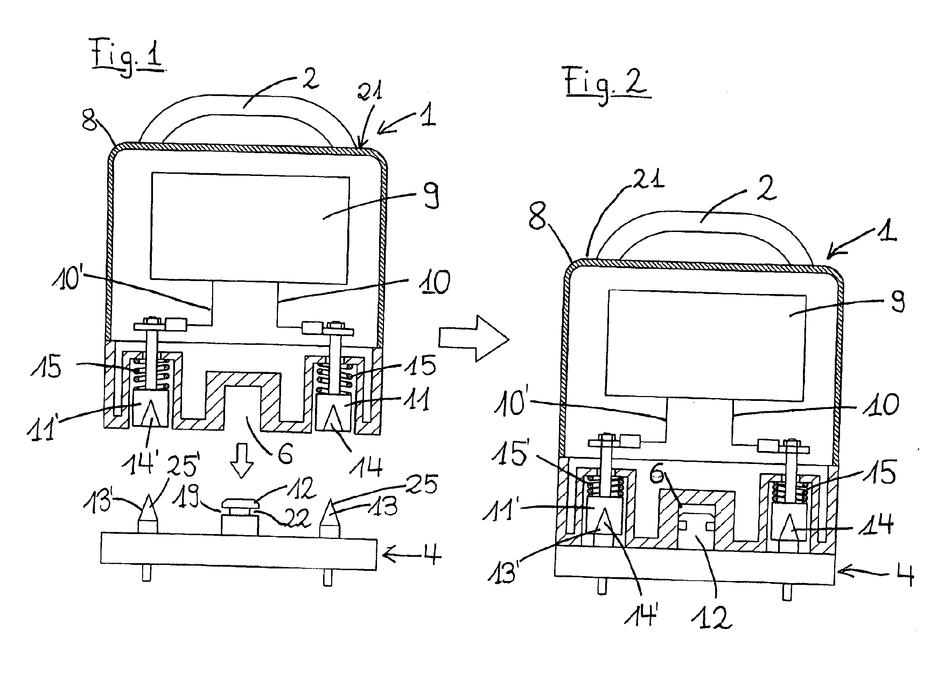

**Fig. 1** zeigt eine Batterie 1. Die Batterie 1 ist geeignet, elektrische Energie zu speichern und mehrmals wieder aufgeladen zu werden. Außerdem kann die Batterie 1 verwendet werden, um elektrische Energie für den Antrieb eines elektrisch angetriebenen Fahrzeugs bereitzustellen. Insbesondere ist die Batterie 1 vorgesehen für den Einbau in ein elektrisch angetriebenes Zweirad.

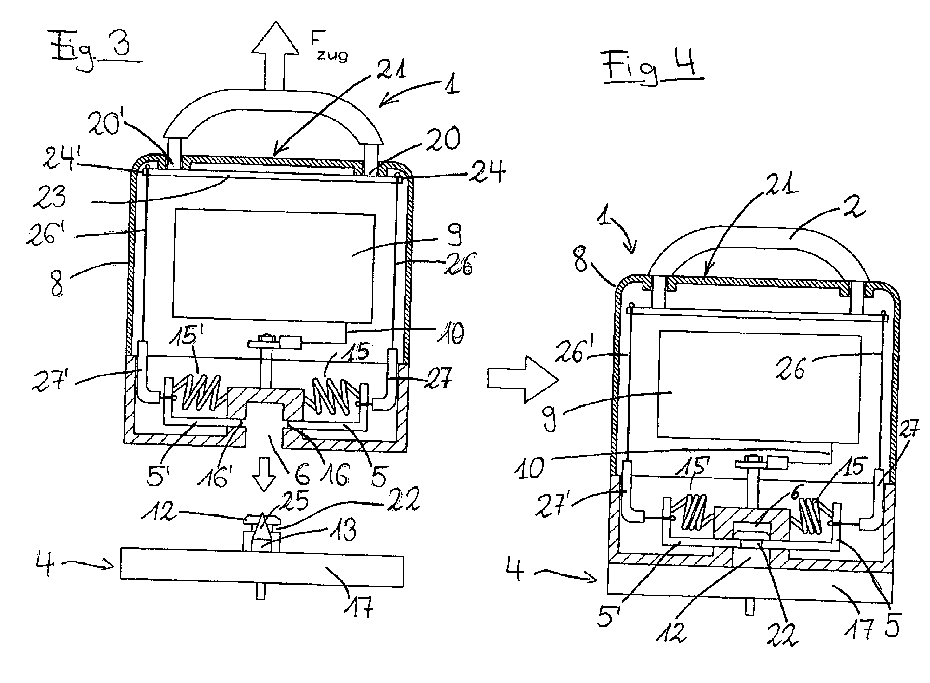

Die Batterie 1 weist einen Griff 2 auf. Der Griff 2 ist als Henkel oben an der Batterie 1 angeordnet und kann aus verschiedenen steifen oder elastischen Materialien, wie Textil, Kunststoff und/oder Metall gefertigt sein. Der Griff 2 ist geeignet, dass der Benutzer durch den Griff 2 hindurch greifen und somit die Batterie 1 mittels des Griffs 2 handhaben kann. Der Griff 2 ist, wie in **Fig. 3** gezeigt, mit den beiden Enden 20, 20' durch zwei Öffnungen des Batteriegehäuses **8** geführt und an dem Batteriegehäuse **8** gleitend gelagert.

Eine Batteriegehäuse **8** umgibt die Batterie **1** an der Oberseite **21** und zumindest den vier Seiten und ist aus einem bevorzugt starren Material gefertigt. Insbesondere ist das Batteriegehäuse **8** aus einem elektrisch nicht leitenden Material, so dass das Batteriegehäuse **8** den Energiespeicher **9** nach außen zumindest teilweise elektrisch isoliert und so versehentliche elektrische Kontakte verhindert.

Die Batteriegehäuse **8** umhüllt den Energiespeicher **9**, der mehrere Batterieelemente, wie beispielsweise Nickel-Cadmium-Batterien und/oder Lithium-lonen-Batterien, umfasst. Die Batterieelemente sind dabei elektrisch zu einer Einheit verbunden, so dass der Energiespeicher **9** einen elektrischen Pluspol und einen elektrischen Minuspol aufweist. An dem Energiespeicher **9** sind zwei elektrische Leitungen **10**, **10'** befestigt, welche vom elektrischen Plus- bzw. Minus-Pol den elektrischen Strom in Richtung der Kontaktelemente 11, 11' führt. Die elektrischen Leitungen **10, 10'** können dabei Leiterbahnen sein oder auch flexible elektrische Leitungen, wie z. B. Draht.

Die elektrischen Kontaktelemente 11, 11' sind mittels Federelementen **15**, **15**' federnd bezüglich der Batteriehülle **8**, gleitend in der Batteriehülle 8 gelagert, so dass die Kontaktelemente 11, 11' in Richtung A bewegt werden können.

Die Kontaktelemente **11, 11'** weisen an ihrem von der Batterie abgewandten Ende eine konische Ausnehmung 14, 14' auf, in welche die Spitze der Kontaktstifte 13,13' geführtwerden kann und so die Kontaktstifte 13, 13' durch die Ausnehmungen 14, 14' geführt werden. So ist auch bei einem geringen Versatz der Kontaktstifte 13, 13' gegenüber den Kontaktelementen 11, 11' ein sichere Verbindung zwischen den Kontaktelementen 11, 11' der Batterie 2 und den Kontaktstiften 13, 13' des Batteriehalters 4 möglich.

Die Batterie 1 weist weiter eine Ausnehmung 6 in der Batteriehülle 8 auf. Die Ausnehmung 6 ist dabei so ausgeformt, dass ein Vorsprung 12 des Batteriehalters 4 in die Ausnehmung 6 eingeführt werden kann. Wie in **Fig. 3** gezeigt ist, weist die Ausnehmung 6 zumindest zwei Öffnungen 16, 16' auf, durch welche Verriegelungselemente **5, 5**' geführt werden.

Der Vorsprung 12 ist bevorzugt zylinderförmig und steht senkrecht auf einer Grundplatte 17 des Batteriehalters 4. Die zylindrische Form erleichtert durch die Rotationsymmetrie das Einführen des Vorsprungs 12 in die Ausnehmung 6. Der Vorsprung 12 weist an seiner von der Grundplatte 17 des Batteriehalters 8 entfernten Seite 18 abgeschrägte Kanten 19 auf, um ein Einführen des Vorsprungs 12 in die Ausnehmung 6 zu erleichtern.

Der Vorsprung 12 weist weiter eine Nut 22 auf, die sich ringförmig um den Vorsprung 12 zieht. Die Nut 22 hat Abmessungen, dass die Verriegelungselemente **5, 5'** in die Nut **22** eingeführt werden können und so die Batterie 1 an dem Batteriehalter 4 halten.

Der Batteriehalter 4 weist an seiner Grundplatte 17 zwei Kontaktstifte 13, 13' auf. Jeweils ein Kontaktstift 13, 13' ist mit einem elektrischen Pol (Plus- oder Minus-Pol) eines elektrischen Verbrauchers, wie einem Elektromotor oder dem Pol einer elektrischen Energiequelle zum Wiederbeladen der Batterie 1, verbunden. Diese Kontaktstifte 13, 13' bestehen aus einem elektrisch leitenden Material und weisen eine konisch zulaufende Spitze 25, 25' auf.

Wie in **Fig. 2** gezeigt ist, wird im Verriegelungszustand der Vorsprung 12, der am Batteriehalter 4 angeordnet ist, in die Ausnehmung 6 eingeführt. Die elektrischen Kontakte 13, 13' die ebenfalls an dem Batteriehalter 4 angeordnet sind, befinden sich im selben Abstand zueinander, wie die beiden Ausnehmungen 14 und 14' in den Kontaktelementen **11, 11**' der Batterie **1**. Wird nun die Batterie 1 auf den Batteriehalter4 aufgesetzt, so wird die Ausnehmung **6** auf den Vorsprung **12** des Batteriehalters **4** gestülpt. Die Kontaktstifte 13, 13' werden in die Ausnehmungen **14, 14'** eingeführt, die durch die Kontakte **11, 11'** gebildet werden, und die Kontakte **11**, **11**' werden gegen die Kraft der Federn **15**, **15'** in Richtung der Batterie 1 gedrückt. Dadurch wird einerseits die Batterie 1 durch das Halten des Vorsprungs 12 in der Ausnehmung 6 gegen das horizontale Verschieben der Batterie 1 gegen den Batteriehalter 4 gesichert, andererseits wird ein elektrischer Kontakt durch die Verbindung der Kontaktstifte 13, 13' mit der Kontaktelementen **11, 11'** hergestellt.

**Fig. 3** zeigt das System aus **Fig. 2** aus einer um 90° gedrehten Perspektive. Der Griff 2 ist durch die Hülle **8** gleitend geführt. Der Griff **2** weist zwei Enden 20, 20' auf, die miteinander durch ein Verbindungselement 23 verbunden sind. An den Enden 24, 24' des Verbindungselement sind jeweils als flexibles Verbindungselement ein Draht 26, 26' angebracht. Diese Drähte 26, 26' werden über jeweils eine Führung **27, 27'** um 90° in Richtung der Verriegelungselemente **5, 5**' geführt. Die Verriegelungselemente **5, 5**' sind horizontal in die Ausnehmung 6 bewegbar und jeweils mittels einer Feder 15, 15' in einer Gleichgewichtsposition in der Ausnehmung 6 positioniert, so dass ohne Betätigung des Griffs 2, die Verriegelungselemente 5, 5' in einem Verriegelungszustand verharren.

**Fig. 4** zeigt das System aus **Fig. 3****,** aus derselben Perspektive in einer Verriegelungsposition.

Das System wird wie folgt verwendet. Die Batterie 1 wird anhand des Griffes 2 angehoben. Dabei bewegt sich der Griff 2 von der Batterie 1 weg, da die Batterie 1 durch die Schwerkraft nach unten gezogen wird. Durch die Bewegung des Griffes 2 relativ zu der Batterie 1 wird das Verbindungselement 23 des Griffes 2 an die Batteriehülle bewegt, bis das Verbindungselement 23 an der Innenseite der Batteriehülle 8 anliegt. Ebenfalls durch die Bewegung des Griffes 2 relativ zur Batteriehülle 8 werden die flexiblen Verbindungselemente 26, 26' gespannt und somit die Verriegelungselemente 5, 5' aus der Ausnehmung 6 zumindest teilweise zurückgezogen. In diesem unverriegelten Zustand wird die Batterie 1 auf den Batteriehalter 4 aufgesetzt. Dabei wird der Vorsprung 12 in die Ausnehmung 6 eingeführt, die Kontaktstifte 13, 13' treffen auf die Kontaktelemente 11, 11' und drücken durch die Gewichtskraft der Batterie 1 die Kontaktelemente 11, 11' in die Richtung entgegen der Schwerkraft. Die Spitzen der Kontaktstifte 13, 13' sind dabei in den Ausnehmungen 14, 14' der Kontaktelemente 11, 11' platziert.

Durch die Entlastung des Griffs 2 wird der Griff 2 über die flexiblen Verbindungsmittel 26, 26' mittels der federgelagerten Verriegelungselemente 5, 5' in Richtung der Batteriehülle 8 bewegt. Die Verriegelungselemente 5, 5' werden dabei in die Aussparung 6 bewegt. Dabei werden die Verriegelungselemente 5, 5' in der Nut 22 des Vorsprungs 12 platziert und so die Batterie 1 gegen Verschiebungen in vertikaler Richtung gesichert.

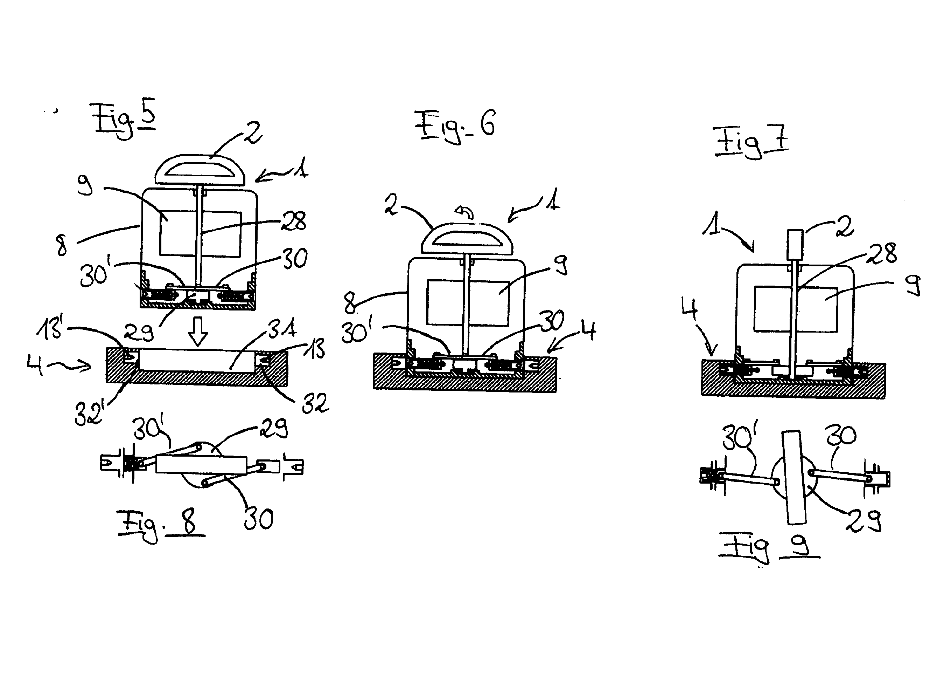

**Fig. 5** zeigt eine weitere Ausführungsform eines Systems bestehend aus einer Batterie 1 und einem Batteriehalter 4. Auch diese Batterie 1 weist einen Griff 2 und eine Batteriehülle 8 auf. In der Batteriehülle 8 befindet sich wiederum ein Energiespeicher 9. Der Griff 2 ist relativ zu der Batteriehülle 8 horizontal drehbar gelagert. Durch die Drehung des Griffes 2 wird ein festes Verbindungselement 28 mit dem Griff 2 mitgedreht. Dieses Verbindungselement 28 ist mit einer drehbar gelagerten Scheibe 29 fest verbunden, so dass mit einer Drehung des Griffes 2 die Scheibe 29 ebenfalls horizontal gedreht wird. An der Scheibe 29 befinden sich zwei exzentrisch angeordnete schwenkbar gelagerte Arme 30, 30', welche die Rotationsbewegung in eine Linearbewegung übersetzen und die beiden Verriegelungselemente nach außen verschieben.

Die Batterie 1 wird wie folgt verwendet:
Die Batterie 1 wird in die Ausnehmung 31 des Batteriehalters 4 eingeführt. Durch die Ausnehmung 31 wird die Batterie 1 in horizontaler Richtung gehalten. Die Verriegelungselemente 5, 5' sind horizontal verschiebbar durch Öffnungen an der Seite der Batteriehülle 8 gelagert. Der Batteriehalter 4 weist an den Seiten der Ausnehmung Kontaktstifte mit einer konischen Spitze auf.

Ist die Batterie **1**, wie in **Fig. 1** gezeigt, in der Ausnehmung **31** des Batteriehalters 4 eingeführt, so liegen die Kontaktelemente **11, 11'**, die hier zugleich Verriegelungselemente **5, 5'** sind, den Kontaktstiften des Batteriehalters **4** gegenüber. Durch die Drehung des Griffs **2**, wie in **Fig. 7** gezeigt, wird das starre Verbindungselement **7** als Drehachse gedreht und damit auch die Scheibe **29.** Die Arme **30, 30',** die exzentrisch an der Scheibe **29** angeordnet sind, schieben durch die Drehung der Scheibe **29** die Kontaktelemente **11, 11'** in jeweils eine Ausnehmung 32, 32', in welche sich die Kontaktstifte 13, 13' befinden. Durch die horizontale Verschiebung der Verriegelungselemente drücken die Kontaktstifte auf die Verriegelungselemente, welche durch Federn in horizontaler Richtung verschiebbar sind. Dadurch wird ein elektrischer Kontakt zwischen den elektrischen Polen der Batterie 1 und den elektrischen Polen des Batteriehalters 4 hergestellt.

**Fig. 8** zeigt den Verriegelungsmechanismus in einem unverriegelten Zustand.

**Fig. 9** zeigt den Verriegelungsmechanismus in einem verriegelten Zustand.

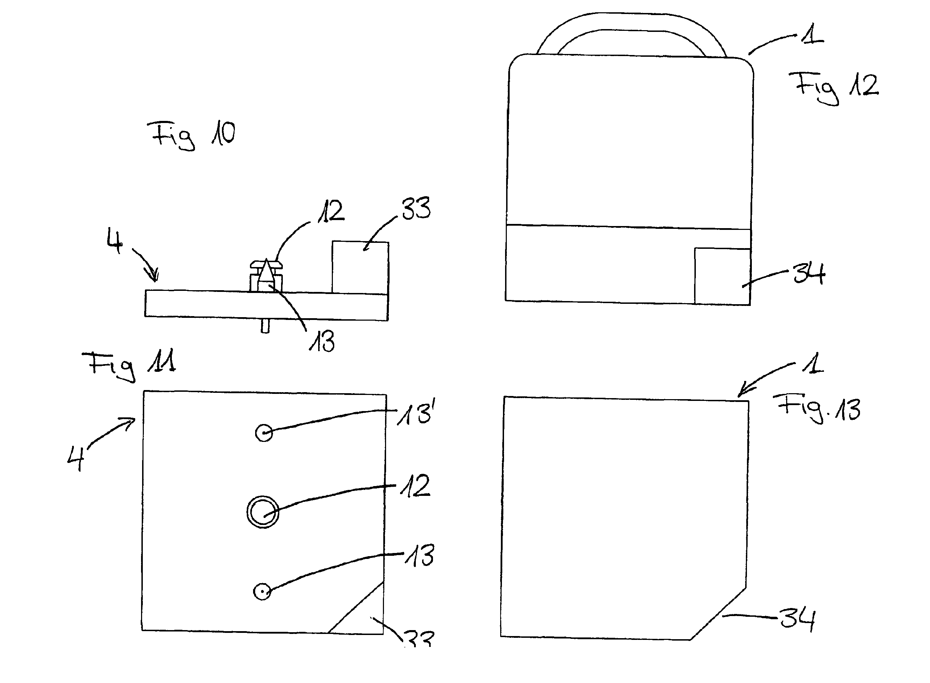

**Fig. 10** zeigt den Batteriehalter 4 von der Seite. Der Batteriehalter weist einen Vorsprung 33 auf, der in einer Ecke platziert ist. Die Aufnahme für die Batterie bekommt somit einen asymmetrischen Querschnitt, damit die Batterie 1 nur in einer bestimmten Orientierung an dem Batteriehalter 4 platziert werden kann.

**Fig. 11** zeigt den Batteriehalter nach der **Fig. 10** von oben.

**Fig. 12** zeigt die Batterie 1, wobei eine Ecke der Batterie eine Aussparung 34 aufweist. Die Ausmaße der Aussparung **34** sind dabei so gewählt, dass die Aussparung **34** den Vorsprung **33** aufnehmen kann.

**Fig. 13** zeigt die Batterie **1** aus **Fig. 12** von oben.

### Bezugszeichen

| | |
|---|---|
| 1 | Batterie |
| 2 | Griff |
| 3 | Arretiereinrichtung |
| 4 | Batteriehalter |
| 5 | Verriegelungselement |
| 6 | Ausnehmung |
| 7 | Flexibles/starres Element |
| 8 | Batteriehülle |
| 9 | Energiespeicher |
| 10 | Leitung |
| 10' | Leitung |
| 11 | Kontaktelement |
| 11' | Kontaktelement |
| 12 | Vorsprung |
| 13 | Kontaktstift |
| 13' | Kontaktstift |
| 14 | Ausnehmung der Kontaktelemente |
| 14' | Ausnehmung der Kontaktelemente |
| 15 | Federelement |
| 15' | Federelement |
| 16 | Öffnung in der Batteriehülle |
| 16' | Offnung in der Batteriehülle |
| 17 | Grundplatte des Batteriehalters |
| 18 | Oberseite des Vorsprungs |
| 19 | abgeschrägte Kante |
| 20 | Griffende |
| 20' | Griffende |
| 21 | Oberseite der Batterie |
| 22 | Nut |
| 23 | Verbindungselement des Griffs |
| 24 | Enden des Verbindungselements |
| 24' | Enden des Verbindungselements |
| 25 | Spitze der Kontaktstifte |
| 25' | Spitze der Kontaktstifte |
| 26 | Drahtverbindung |
| 26' | Drahtverbindung |
| 27 | Führung |
| 27' | Führung |
| 28 | festes Verbindungsmittel |
| 29 | Scheibe |
| 30 | Arm |
| 30' | Arm |
| 31 | Ausnehmung |
| 32 | Ausnehmung |
| 32' | Ausnehmung |

## Patentansprüche

1. Batterie (1) umfassend zumindest einen Griff (2) und eine Arretiereinrichtung (3) zum Arretieren der Batterie (1) an einem Batteriehalter (4), **dadurch gekennzeichnet, dass** die Arretiereinrichtung (3) mittels des Griffs (2) betätigbar ist.

2. Batterie (1) nach Anspruch 1, **dadurch gekennzeichnet, dass** die Arretiereinrichtung (3) zumindest ein Verriegelungselement (**5, 5'**) aufweist, das in Eingriff mit dem Battenehalter (**4**) gebracht werden kann.

3. Battene (**1**) nach Anspruch **2, dadurch gekennzeichnet, dass** die Batterie (**1**) zumindest eine Ausnehmung (**6**) aufweist, in welche das Verriegelungselement (**5, 5**') in einem Verriegelungszustand hineinreicht.

4. Batterie (**1**) nach einem der Ansprüche **2** oder **3**, **dadurch gekennzeichnet, dass** der Griff (**2**) und die Arretiereinrichtung (**3**) so ausgebildet sind, dass durch eine Linearbewegung und/oder eine Rotationsbewegung des Griffs (**2**) das Verriegelungselement (**5, 5**') aus einem Verriegelungszustand in einem Entriegelungszustand überführbar ist.

5. Batterie (**1**) nach einem der Ansprüche **2** bis 4, **dadurch gekennzeichnet, dass** das Verriegelungselement **(5, 5')** über ein flexibles und/oder starres Element (**7**) mit dem Griff (**2**) verbunden ist.

6. Batterie (**1**) nach einem der Ansprüche **4** oder **5**, **dadurch gekennzeichnet, dass** der Griff (**2**) drehbar gelagert ist und durch die Rotationsbewegung des Griffs (2) zumindest ein Verriegelungselement (5, 5'), insbesondere senkrecht oder nahezu senkrecht zur Drehachse (8) des Griffs (2), bewegt wird.

7. Batterie (1) nach einem der Ansprüche 1 bis 6, **dadurch gekennzeichnet, dass** die Batterie (1) zumindest einen Kontakt (9), bevorzugt zwei Kontakte (9), aufweist, die federnd gelagert sind.

8. Batterie (1) nach einem der Ansprüche 1 bis 6 **dadurch gekennzeichnet, dass** zumindest ein Verriegelungselement (5, 5') geeignet ist, einen elektrischen Kontakt mit einem elektrischen Pol der Batterie (1) herzustellen.

9. System umfassend eine Batterie (1) nach einem der Ansprüche 1 bis 8 und einen Batteriehalter (4) zum temporären Halten der Batterie (**1**).

10. Fahrzeug, insbesondere elektrisch angetriebenes Fahrzeug, umfassend ein System nach Anspruch 9.
Es folgen 4 Blatt Zeichnungen
